# FASCICULE DE BREVET EUROPEEN

(11) **EP 0 761 379 B1**
(45) Date de publication et mention de la délivrance du brevet: **08.12.1999**
(21) Numéro de dépôt: 96401914.5
(22) Date de dépôt: 06.09.1996
(51) Int. Cl.: B23K 35/38

(54) **Procédé et mélange gazeux pour le soudage à l'arc de pièces en aluminium**
Verfahren und Schutzgasmischung zum Lichtbogenschweissen von Aluminium-Werkstücken
Process and shielding gas mixture for arc welding of aluminum workpieces

(30) Priorité: 08.09.1995 FR 9510519
(43) Date de publication de la demande: 12.03.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Marchand, Didier, 78100 Saint-Germain-en-Laye (FR); Diot, Henri, 95310 Saint-Ouen l'Aumone (FR); Soula, Richard, 44120 Vertou (FR)
(74) Mandataire: Helary, Yvon

(56) Documents cités:
- EP-A- 0 502 318
- EP-A- 0 639 423
- DE-A- 4 007 673
- DE-A- 4 327 672
- DE-C- 4 028 074

## Description

La présente invention concerne le soudage à l'arc avec électrode réfractaire (soudage TIG pour Tungsten Inert Gas) de pièces en aluminium et en alliage d'aluminium et plus particulièrement un mélange gazeux de protection pour ce type de soudage.

On sait que, du fait de la tendance à la formation de couches d'alumine Aℓ₂O₃ à la surface de pièces en aluminium, ces couches, isolantes, constituent une gêne pour le soudage TIG de pièces en aluminium. Pour détruire cette couche d'alumine, on peut utiliser la torche à arc en courant alternatif, l'électrode en tungstène étant ainsi alternativement réceptrice (polarité dite inverse), le flux d'électrons s'échappant de la pièce en aluminium craquant et dispersant la couche d'alumine, puis émissive (polarité directe), le flux d'électrons bombardant la pièce et assurant la pénétration de la soudure. Dans ce dernier cas, l'électrode est froide alors que lorsqu'elle est réceptrice (anode), elle s'échauffe sous l'effet du flux d'électrons, ce qui explique que la commutation de la polarité inverse à la polarité directe est aisée alors que l'inversion de polarité directe en polarité inverse peut être délicate, le bain de soudure étant moins émissif que l'électrode de tungstène. Ce phénomène peut être aggravé par la présence d'hélium dans le gaz de soudage. L'hélium, à la différence de l'argon, ne favorise pas l'ionisation du gaz, ce qui peut entraîner l'apparition de brèves ruptures d'arc ou d'instabilité, ceci d'autant plus que le pourcentage en hélium est élevé. En soudage manuel, le soudeur est alors obligé de compenser en restant momentanément sur place, la vitesse de soudage s'en trouvant réduite. En soudage automatique, les instabilités peuvent occasionner des irrégularités de la pénétration entraînant rebut ou reprise de pièces soudées. On comprend que, alors que l'addition d'hélium améliore intrinsèquement les performances du soudage TIG des pièces en aluminium, essentiellement un accroissement de la profondeur de pénétration et une meilleure compacité par une tension d'arc plus importante et un bain plus chaud, en pratique, les teneurs en hélium dans les mélanges de soudage TIG de pièces d'aluminium n'excèdent pas quelques dizaines de pourcents, une teneur atteignant 50 % étant exceptionnelle, comme le rappelle l'ouvrage "Welding Aluminum : Theory and Practice" édité par The Aluminum Association, Second Edition, June 1991, page 6.3, colonne de gauche, ou le document EP-A-0.639.423, qui décrit en outre l'addition de faibles teneurs de dioxyde de carbone ou d'oxygène dans le gaz de soudage à base d'argon pour améliorer sensiblement la stabilité de l'arc et assurer un meilleur transfert calorifique vers le bain de soudure.

La présente invention a pour objet de proposer un nouveau mélange gazeux pour le soudage TIG en courant alternatif de pièces en aluminium ou en alliage d'aluminium permettant de profiter pleinement des effets bénéfiques d'une haute teneur en hélium au niveau des performances de soudage et de la compacité du cordon sans affecter la stabilité de l'arc.

Pour ce faire, selon une caractéristique de l'invention, on utilise, à l'emplacement de la soudure, un mélange gazeux comprenant entre 60 % et 80% d'hélium, plus de 1000, et moins de 1200 vpm, de dioxyde de carbone (CO₂), le solde étant de l'argon.

Selon une caractéristique particulière de l'invention, la teneur en hélium est comprise entre 70 et 80 % et la teneur en CO₂ comprise entre 1100 et 1200 vpm.

La Demanderesse a en effet constaté que, contrairement à l'enseignement du document EP-A-0.639.423 sus-mentionné, qui dans l'exemple de soudage TIG décrit un mélange gazeux dépourvu d'hélium, le rôle stabilisateur du CO₂ ne présentait un réel intérêt que pour les fortes teneurs en hélium, pour lesquelles les ruptures d'arc apparaissent de façon significative.

Ainsi, avec un mélange comprenant :
- 80 % He
- 1100 vpm CO₂
- solde argon,
on réalise, en soudage TIG courant alternatif, des assemblages sur une épaisseur de 5 mm de pièces en alliages d'aluminium et de magnésium en une passe avec seulement une intensité de 90 Ampères. La compacité et les caractéristiques mécaniques de la soudure sont bonnes et il n'y a pas de détérioration visible de l'électrode.

Des teneurs en CO₂ pouvant atteindre 0,5 %, voire près de 1 %, peuvent être utilisées avec le même effet stabilisant dans une buse annulaire venant gainer le flux de protection gazeuse axial à l'électrode, ce flux axial étant constitué d'un mélange hélium majoritaire/argon exempt de CO₂.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art, dans le cadre des revendications.

## Revendications

1. Procédé de soudage à l'arc en courant alternatif avec électrode réfractaire de pièces en aluminium ou en alliage d'aluminium utilisant, à l'emplacement de la soudure, un mélange gazeux de protection comprenant entre 60 % et 80 % d'hélium et entre 1000 et 1200 vpm de dioxyde de carbone, le solde étant l'argon.

2. Procédé selon la revendication 1, caractérisé en ce que l'on utilise un mélange gazeux de protection contenant entre 70 et 80 % environ d'hélium et entre 1100 et 1200 vpm de dioxyde de carbone.

3. Mélange gazeux pour le soudage à l'arc avec électrode réfractaire et sous courant alternatif de pièces en aluminium ou d'alliage d'aluminium, comprenant entre 60 % et 80 % d'hélium, entre 1100 et 1200 vpm de dioxyde de carbone, le solde étant l'argon.

## Claims

1. Process for alternating-current arc welding with a refractory electrode of components made of aluminium or of an aluminium alloy, employing, at the location of the weld, a gaseous protective mixture including between 60 % and 80 % of helium and between 1000 and 1200 vpm of carbon dioxide, the remainder being argon.

2. Process according to Claim 1, characterized in that a gaseous protective mixture is employed containing approximately between 70 and 80 % of helium and between 1100 and 1200 vpm of carbon dioxide.

3. Gaseous mixture for arc welding with a refractory electrode and under alternating current of components made of aluminium or of aluminium alloy, including between 60 % and 80 % of helium and between 1100 and 1200 vpm of carbon dioxide, the remainder being argon.

## Patentansprüche

1. Verfahren zum Wechselstromlichtbogenschweißen mit nichtabschmelzender Elektrode von Teilen aus Aluminium oder einer Aluminiumlegierung, bei dem an der Schweißstelle ein Schutzgasgemisch verwendet wird, das zwischen 60% und 80% Helium und zwischen 1000 und 1200 vpm Kohlendioxid, Rest Argon, enthält.

2. Verfahren nach Anspruch 1, dadurch gekennzeichnet, daß ein Schutzgasgemisch verwendet wird, das zwischen ca. 70 und 80% Helium und zwischen 1100 und 1200 vpm Kohlendioxid enthält.

3. Gasgemisch zum Lichtbogenschweißen mit nichtabschmelzender Elektrode und unter Wechselstrom von Teilen aus Aluminium oder einer Aluminiumlegierung, das zwischen 60% und 80% Helium, zwischen 1100 und 1200 vpm Kohlendioxid, Rest Argon, enthält.
